# EUROPEAN PATENT SPECIFICATION

(11) **EP 4 315 777 B1**
(45) Date of publication and mention of the grant of the patent: **01.10.2025**
(21) Application number: 21723013.5
(22) Date of filing: 28.04.2021
(51) Int. Cl.: H04W 24/04, H04W 28/08, H04L 41/0894, H04W 24/10

(54) **CONTROLLING USER PLANE FUNCTION (UPF) LOAD**
STEUERUNG DER LAST EINER BENUTZEREBENENFUNKTION (UPF)
COMMANDE DE CHARGE DE FONCTION DE PLAN UTILISATEUR (UPF)

(30) Priority: 22.03.2021 EP 21382227
(43) Date of publication of application: 07.02.2024
(73) Proprietor: Telefonaktiebolaget LM Ericsson (publ), 164 83 Stockholm (SE)
(72) Inventor: PUENTE PESTAÑA, Miguel Angel, 28007 Madrid (ES); MUÑOZ DE LA TORRE ALONSO, Miguel Angel, 28002 Madrid (ES); ALVAREZ DOMINGUEZ, Rodrigo, 28016 Madrid (ES); RUNE, Göran, 582 52 Linköping (SE)
(74) Representative: Ericsson
(86) International application number: PCT/IB2021/053545
(87) International publication number: WO 2022/200839

(56) References cited:
- EP-A1- 2 918 096
- WO-A1-2020/001795
- US-A1- 2020 059 992

## Description

### TECHNICAL FIELD

The present disclosure generally relates to wireless communication networks, and more particularly relates to controlling user plane function (UPF) load in Third Generation Partnership Project (3GPP) networks.

### BACKGROUND

The 3GPP is a telecommunication standards organization that produces specifications defining numerous technologies in support of wireless networks, such networks including (for example) Long Term Evolution (LTE) networks and Fifth Generation (5G) networks. A fundamental characteristic of a 5G core network is the separation of the control and user planes. The control plane is the portion of the network that handles signaling traffic, whereas the user plane is the portion of the network that handles network user traffic. Due to the everincreasing amount of user traffic wireless communication networks are transporting (e.g., to stream high-definition video), the user plane is increasingly likely to be overloaded, particularly as compared to the control plane.

EP 2 918 096 A1 discloses a traffic handling method (100) for use in a Policy and Charging Rules Function (PCRF). The method includes: receiving information about load status of a Radio Access Network (RAN) area (110); obtaining information about traffic type of one or more User Equipments (UEs) associated with said RAN area (120); generating a traffic handling policy based on the received information about load status of said RAN area and the obtained information about traffic type (130); and sending the traffic handling policy to a gateway node in the core network, for applying it to said one or more UEs associated with said RAN area (140).

WO 2020/001795 A1 discloses a method of reporting traffic metrics by a User Plane Function, UPF, to a Session Management Function, SMF, in a telecommunication network, wherein said method comprises the steps of receiving, by said UPF, a session creation/modification message for creating/modifying a session between said UPF and said SMF, wherein said message comprises a Reporting Rule thereby defining which traffic metric is to be reported by said UPF to said SMF, measuring, by said UPF, said traffic metric based on said received Reporting Rule, transmitting, by said UPF, to said SMF, a reporting message, wherein said reporting message comprises said measured traffic metric.

US 2020/059992 A1 discloses a method of operating a UPF in a wireless communication system including receiving a data packet, identifying a PFCP session context associated with the data packet, determining whether a PDR associated with the PFCP session context should be modified or a new PDR should be created, transmitting a request to a session management function to provision a new or modified PDR at the UPF, receiving a session modification response from the SMF provisioning the new or modified PDR for the PFCP session context at the UPF, and applying the new or modified PDR on the data packet.

### SUMMARY

The invention is defined by the subject-matter of the independent claims. Advantageous embodiments are indicated in the dependent claims.

Embodiments of the present disclosure are generally directed to implementing load control for network nodes handling user plane traffic. One or more embodiments include a method implemented by a Session Management Function (SMF) in a wireless communication network. The method comprises, responsive to receiving a load report from a User Plane Function (UPF), installing a load reduction policy rule in the UPF. The load reduction policy rule comprises a criterion for identifying one or more users subject to the load reduction policy rule.

In some embodiments, the method further comprises sending, to the UPF, one or more requests to activate one or more types of load reporting. At least one of the requests to activate indicates a trigger for sending the load report. In some such embodiments, the method further comprises registering, in a Unified Data Repository (UDR), the one or more users as being of a user type that corresponds to a type of load reporting of the load report.

Additionally or alternatively, the one or more requests to activate the one or more types of load reporting may comprise a request to activate reporting of load caused by Audio/Video streaming. Additionally or alternatively the one or more requests to activate the one or more types of load reporting may comprise a request to activate reporting of load caused by heavy users. Additionally or alternatively, the method may further comprise receiving a Packet Forwarding Control Protocol, PFCP, association request from the UPF. The PFCP association request indicates that the UPF supports providing the load report. In some such embodiments, at least one of the requests to activate is comprised in an acknowledgement to the PFCP association request.

Additionally or alternatively, the method may further comprise sending, to the UPF, a PFCP session establishment request comprising one or more Policy and Charging Control (PCC) rules. Installing the load reduction policy rule in the UPF comprises fetching the load reduction policy rule from the PCF and sending the load reduction policy rule to the UPF in a PFCP session update request to update the PCC rules. In some such embodiments, at least one of the requests to activate is comprised in the PFCP session establishment request.

In some embodiments, the load report indicates, for each of one or more user categories, a respective amount of load on the UPF caused by the user category.

In some embodiments, the load report comprises a list of user identifiers corresponding to users responsible for load indicated in the load report.

In some embodiments, installing the load reduction policy rule in the UPF is responsive to determining that the UPF is overloaded based on the load report.

In some embodiments, the method further comprises, after having installed the load reduction policy rule, determining that the UPF is not overloaded, and in response, installing a further policy rule in the UPF that eliminates at least one of the one or more users from being subject to the load reduction policy rule.

In some embodiments, the criterion for identifying one or more users subject to the load reduction policy rule comprises an indication that the load reduction policy rule applies to users that consume more than a threshold amount of bandwidth.

In some embodiments, the criterion for identifying one or more users subject to the load reduction policy rule comprises an indication that the load reduction policy rule applies to users that are Audio/Video streaming.

Other embodiments include an SMF configured to, responsive to receiving a load report from a UPF, install a load reduction policy rule in the UPF. The load reduction policy rule comprises a criterion for identifying one or more users subject to the load reduction policy rule.

In some embodiments, the SMF is further configured to perform any one of the methods described above.

Other embodiments include an SMF comprising interface circuitry configured to receive a load report from a UPF. The SMF further comprises processing circuitry communicatively connected to the interface circuitry. The processing circuitry is configured to, responsive to receiving the load report from the UPF via the interface circuitry, install a load reduction policy rule in the UPF. The load reduction policy rule comprises a criterion for identifying one or more users subject to the load reduction policy rule.

In some embodiments, the processing circuitry is further configured to perform any one of the methods described above.

Other embodiments include a method implemented in a UPF in a wireless communication network. The method comprises sending a load report to an SMF, and receiving a load reduction policy rule in response. The load reduction policy rule comprises a criterion for identifying one or more users subject to the load reduction policy rule. The method further comprises selectively applying the load reduction policy rule to user plane traffic of the one or more users based on the criterion.

In some embodiments, the method further comprises receiving, from the SMF, one or more requests to activate one or more types of load reporting. At least one of the requests to activate indicates a trigger for sending the load report. In some such embodiments, the one or more requests to activate the one or more types of load reporting comprises a request to activate reporting of load caused by Audio/Video streaming. Additionally or alternatively, the one or more requests to activate the one or more types of load reporting may comprise a request to activate reporting of load caused by heavy users.

Additionally or alternatively, the method may further comprise sending a Packet Forwarding Control Protocol (PFCP) association request to the SMF. The PFCP association request indicates that the UPF supports providing the load report. In some such embodiments, at least one of the requests to activate is comprised in an acknowledgement to the PFCP association request.

Additionally or alternatively, the method may further comprises receiving, from the SMF, a PFCP session establishment request comprising one or more PCC rules. The method may further comprise receiving the load reduction policy rule from the SMF in a PFCP session update request to update the PCC rules. The method may further comprise updating the PCC rules responsive to the PFCP session update request. In some such embodiments, at least one of the requests to activate is comprised in the PFCP session establishment request.

In some embodiments, the load report indicates, for each of one or more user categories, a respective amount of load on the UPF caused by the user category.

In some embodiments, the load report comprises a list of user identifiers corresponding to users responsible for load indicated in the load report.

In some embodiments, receiving the load reduction policy rule comprises receiving the load reduction policy rule responsive to the load report indicating the UPF is overloaded.

In some embodiments, the method further comprises, after having received the load reduction policy rule, receiving a further policy rule from the SMF that eliminates at least one of the one or more users from being subject to the load reduction policy rule.

In some embodiments, the criterion for identifying one or more users subject to the load reduction policy rule comprises an indication that the load reduction policy rule applies to users that consume more than a threshold amount of bandwidth.

In some embodiments, the criterion for identifying one or more users subject to the load reduction policy rule comprises an indication that the load reduction policy rule applies to users that are Audio/Video streaming.

Other embodiments include a UPF configured to send a load report to an SMF, and receive a load reduction policy rule in response. The load reduction policy rule comprises a criterion for identifying one or more users subject to the load reduction policy rule. The UPF is further configured to selectively applying the load reduction policy rule to user plane traffic of the one or more users based on the criterion.

In some embodiments, the UPF is further configured to perform any one of the methods implemented in a UPF described above.

Other embodiments include a UPF comprising interface circuitry and processing circuitry communicatively coupled to the interface circuitry. The processing circuitry is configured to send a load report via the interface circuitry to an SMF, and receive a load reduction policy rule via the interface circuitry in response. The load reduction policy rule comprises a criterion for identifying one or more users subject to the load reduction policy rule. The processing circuitry is further configured to selectively apply the load reduction policy rule to user plane traffic of the one or more users based on the criterion.

In some embodiments, the processing circuitry is further configured to perform any one of the methods implemented in a UPF described above.

Other embodiments include a computer program comprising instructions which, when executed on processing circuitry of a network node cause the processing circuitry to carry out any one of the methods described above.

Other embodiments include a carrier containing such a computer program. The carrier is one of an electronic signal, optical signal, radio signal, or computer readable storage medium.

Other embodiments will be apparent in view of the detailed description provided below.

### BRIEF DESCRIPTION OF THE DRAWINGS

Aspects of the present disclosure are illustrated by way of example and are not limited by the accompanying figures with like references indicating like elements.
Figure 1 is a schematic block diagram illustrating an example wireless communication network according to one or more embodiments of the present disclosure.
Figures 2 and 3 are flow diagrams illustrating example methods according to one or more embodiments of the present disclosure.
Figures 4A through 4C are swimming lane diagrams illustrating signaling exchanged between network nodes according to a first example embodiment of the present disclosure.
Figures 5A and 5B are swimming lane diagrams illustrating signaling exchanged between network nodes according to a second example embodiment of the present disclosure.
Figure 6 illustrates an example network node according to one or more embodiments of the present disclosure.

### DETAILED DESCRIPTION

Referring now to the drawings, example embodiments of the disclosure will be described below in the context of a 5G wireless communication network. Those skilled in the art will appreciate that the methods and apparatus herein described are not limited to use in 5G networks but may also be used in wireless communication networks operating according to other standards. Such embodiments may be particularly well suited for (but not limited to) derivatives of, and/or successors to, 5G networks, for example.

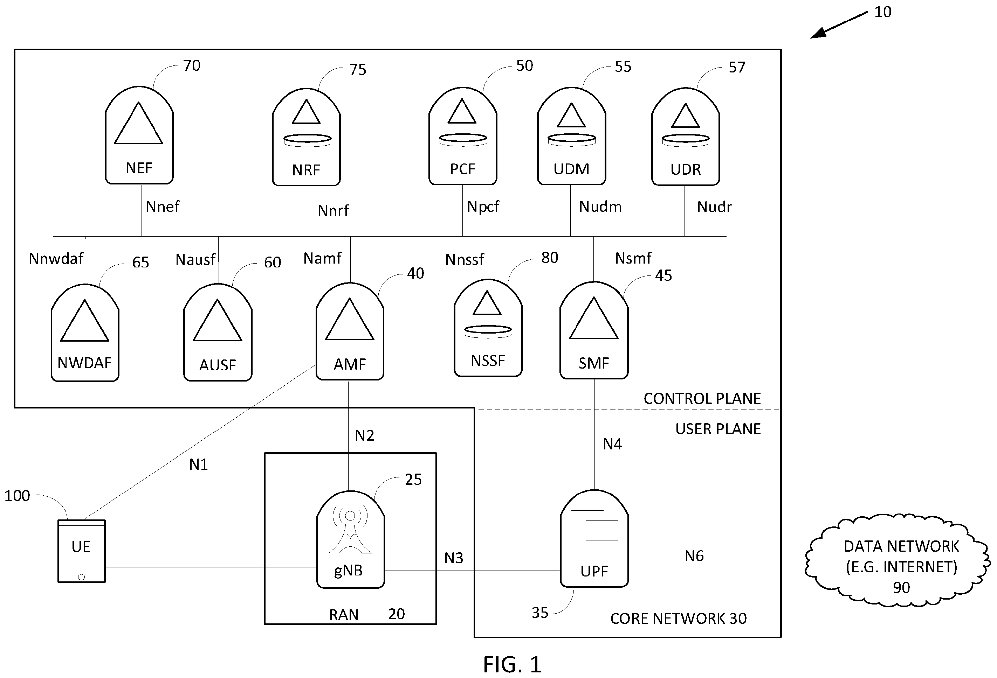

Figure 1 illustrates an example architecture of a wireless communication network 10 according to one or more embodiments of the present disclosure. The wireless communication network 10 comprises a radio access network (RAN) 20 and a core network 30 employing a service-based architecture. The RAN 20 comprises one or more base stations 25 providing radio access to UEs 100 operating within the wireless communication network 10. The base stations 25 are also referred to as gNodeBs (gNBs). The core network 30 provides a connection between the RAN 20 and one or more other packet data networks (PDNs) 90, such as an Internet Protocol (IP) Multimedia Subsystem (IMS) and/or the Internet.

In an example embodiment, the core network 30 comprises a plurality of network functions (NFs), such as a User Plane Function (UPF) 35, an Access and Mobility Management Function (AMF) 40, a Session Management Function (SMF) 45, a Policy Control Function (PCF) 50, a Unified Data Management (UDM) function 55, a Unified Data Repository (UDR) function 57, an Authentication Server function (AUSF) 60, a Network Exposure Function (NEF) 70, a Network Repository Function (NRF) 75, a Network Slice Selection Function (NSSF) 80, and/or a Network Data Analytics Function (NWDAF) 65. These NFs comprise logical entities that reside in one or more core network nodes, which may be implemented through the use of one or more processors, hardware, firmware, or a combination thereof. The functions may reside in a single core network node or may be distributed among two or more core network nodes.

The various NFs (e.g., SMF 45, AMF 40, etc.) in the core network 30 may communicate with one another over predefined interfaces. Additionally or alternatively, one or more of the control plane functions query the NRF 75 or other NF discovery node to discover and communicate with each other.

The 5G core (5GC) network is designed to support network slicing. Network slicing allows the use of virtualized networks to separate networks designed for different purposes. Each network slice is capable of providing customized features and connectivity specifically tailored for a specific purpose, and is capable of executing on a shared, distributed infrastructure that provides high availability and flexibility.

The Global System for Mobile Communications Association Network Group 116 (GSMA NG.116) describes a set of attributes that can be used by an operator to define a network slice type (NEST). These parameters include the maximum number of connections (e.g., concurrent Packet Data Unit (PDU) sessions) supported by the network slice and the maximum number of users (e.g., user equipment (UEs)) supported by the network slice. These attributes provide useful input to scale the network slice and provides enough physical resources to the network slice. There is a significant difference between a network slice designed to serve 10 users and a network slice designed to serve 1,000,000 users. Typically, either the maximum number of connections or the maximum number of terminals is defined by the NEST. The NEST can, in some cases define both the maximum number of connections and the maximum number of terminals supported by the network slice.

One aspect of the present disclosure comprises mechanisms for controlling the load of a UPF 35, particularly with respect to a given network slice in the network. In this regard, embodiments of the present disclosure include particular enhancements to the SMF 45, UPF 35, PCF 50, and/or UDM 55 as will be disclosed in further detail below.

The PCF 50 supports a unified policy framework to govern the behavior of the network. In particular, the PCF 50 may provide Policy and Charging Control (PCC) rules to the SMF 45. The SMF 45 supports, e.g., session establishment, modification, and release, as well as policy related functionalities like termination of interfaces towards policy control functions, charging data collection, support of charging interfaces and/or control/coordination of charging data collection at the UPF 35. In particular embodiments, the SMF 45 receives PCC rules from the PCF 50 and configures the UPF 35 accordingly (e.g., through the N4 reference point using Packet Forwarding Control Protocol (PFCP)). The UDR 57 is a data store for certain subscriber information. In some embodiments, one or more NFs may use the UDM 55 as a front-end to accessing the UDR 57.

According to embodiments, the SMF 45 controls the packet processing in the UPF 35 by establishing, modifying and/or deleting PFCP sessions and by provisioning (e.g., adding, modifying and/or deleting) Packet Detection Rules (PDRs), Forwarding Action Rules (FARs), Quality of Service (QoS) Enforcement Rules (QERs), and/or Usage Reporting Rules (URRs) per PFCP session. Note that a PFCP session may correspond to an individual PDU session or a standalone PFCP session not tied to any PDU session.

Each PDR contains Packet Detection Information (PDI) specifying the traffic filters and/or signatures against which incoming packets are matched. Each PDR is associated with rules that provide the set of instructions to apply to packets matching the PDI. These rules include one FAR that contains instructions related to the processing of the packets (e.g., forward, duplicate, drop, or buffer packets) with or without notifying the CP function about the arrival of a DL packet. The rules may also include zero, one, or more QERs that contain instructions related to the QoS enforcement of the traffic. The rules may also include zero, one, or more URRs that contain instructions related to traffic measurement and reporting.

The UPF 35 supports the handling of user plane traffic based on the rules received from the SMF 45. Among other things, the UPF 35 may perform packet inspection (e.g., through PDRs) and one or more enforcement actions. These enforcement actions may include, for example, traffic steering, QoS, and/or Charging/Reporting (e.g., through FARs, QERs, URRs).

PFCP load/overload control procedures may include a variety of approaches, which may (for example) be compatible with (or suitable for incorporation into) 3GPP TS 29.244. For example, a simple load control procedure may be used mainly for load balancing. According to one such procedure, the SMF 45 prioritizes selection of UPFs 35 with less load. Further, the overload control procedure may define mitigation actions (i.e., in case of overload) that are based on not allowing new sessions to be established (e.g., through message throttling, redirection and prioritization). Although embodiments that incorporate such an approach may be effective at controlling load, it should be noted that not allowing new sessions to be established may directly and negatively impact the user's experience, which would not be desirable.

In some embodiments, NFs (e.g. the UPF 35) may register NF load information in the NRF 75 so that when a consumer (e.g., SMF 45) triggers a discovery procedure, this load information can be used to achieve load balancing (e.g., when SMF 45 triggers a UPF 35 selection procedure). Such approaches may be compatible or suitable for incorporation into 3GPP TS 29.510, for example. These embodiments may also support subscription to NF load changes. However, the resulting notifications produced under such embodiments may be quite demanding on the network (e.g., in terms of network traffic).

Other embodiments may include different network functions (e.g. the UPF 35) sending load information to an OAM so that Performance Measurements (PM) or statistics may be taken. However, in general, traditional 5G networks do not define a procedure regarding what action(s) an OAM should perform in response to particular conditions (e.g., if a UPF load goes above a certain threshold).

User plane NFs like the UPF 35 have a high risk of becoming overloaded, largely due to the exponential increase of user traffic (mainly due to video streaming applications). As compared with control plane NFs like the AMF 40, SMF 45, PCF 50, and NEF 70 (which only need to handle control plane signaling), user plane NFs are far more likely to suffer an overload. Embodiments of the present disclosure address are particularly drawn to providing effective control over the user plane to address mitigate such overload situations.

Although a generally straightforward solution to mitigating user plane overload is to overdimension the network (e.g., by simply deploying more UPFs), this has a high cost for the network operators. Therefore, there is a need to provide network operators with more advanced techniques for controlling the user plane.

In view of the above, particular embodiments of the present disclosure may include traffic optimization techniques (Transmission Control Protocol (TCP)/Quick User Datagram Protocol (UDP) Internet Connections (QUIC) optimization, Adaptive Bit Rate (ABR) shaping, etc.) that reduce the amount of traffic handled by UPFs, while also maintaining support for at least the same number of user sessions as well as mitigating the negative impact of overloading on the user's experience. In so doing, embodiments are directed to implementing 5G networks as Smart Networks, and in particular, provide UPF load control procedures that may be fully automated and minimally impact existing network operability. Known UPF load control procedures as may be known in traditional 3GPP 5GC are still far from providing such solutions. In view of the above, embodiments of the present disclosure address one or more of the problems described above. Particular embodiments propose to leverage the SMF 45 to automate control of the UPF load.

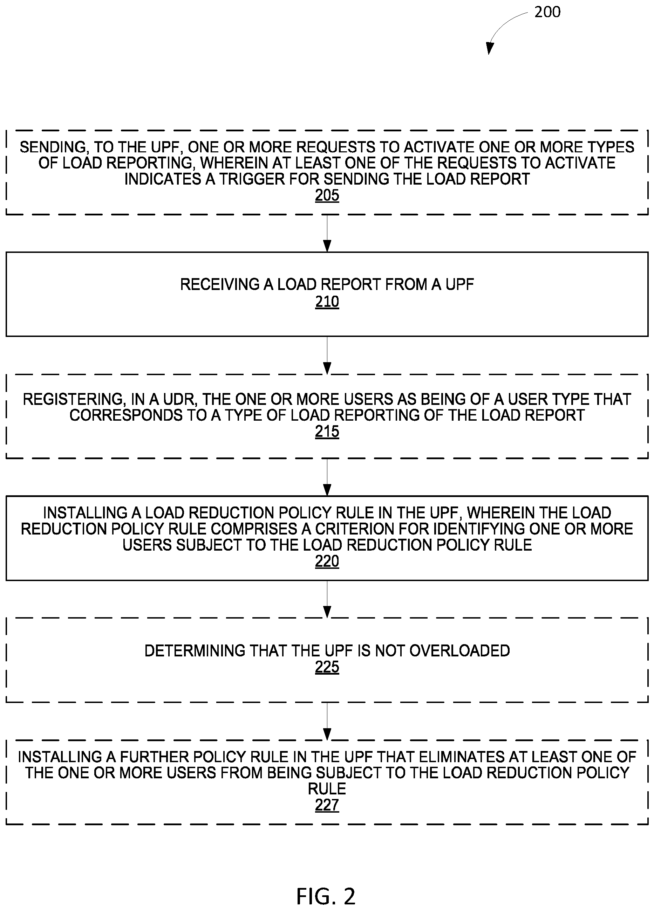

Figure 2 illustrates an example method 200 implemented by an SMF 45 in a wireless communication network 10. The method 200 comprises, responsive to receiving a load report from a UPF 35 (block 210), installing a load reduction policy rule in the UPF 35 (block 220). The load reduction policy rule comprises a criterion for identifying one or more users subject to the load reduction policy rule.

In some embodiments, the method 200 further comprises sending, to the UPF 35, one or more requests to activate one or more types of load reporting (block 205). At least one of the requests to activate indicates a trigger for sending the load report.

In some embodiments, the method 200 further comprises registering, in a UDR 57, the one or more users as being of a user type that corresponds to a type of load reporting of the load report (block 215).

In some embodiments, the method 200 further comprises, after having installed the load reduction policy rule, determining that the UPF 35 is not overloaded (block 225), and in response, installing a further policy rule in the UPF 35 that eliminates at least one of the one or more users from being subject to the load reduction policy rule (block 227).

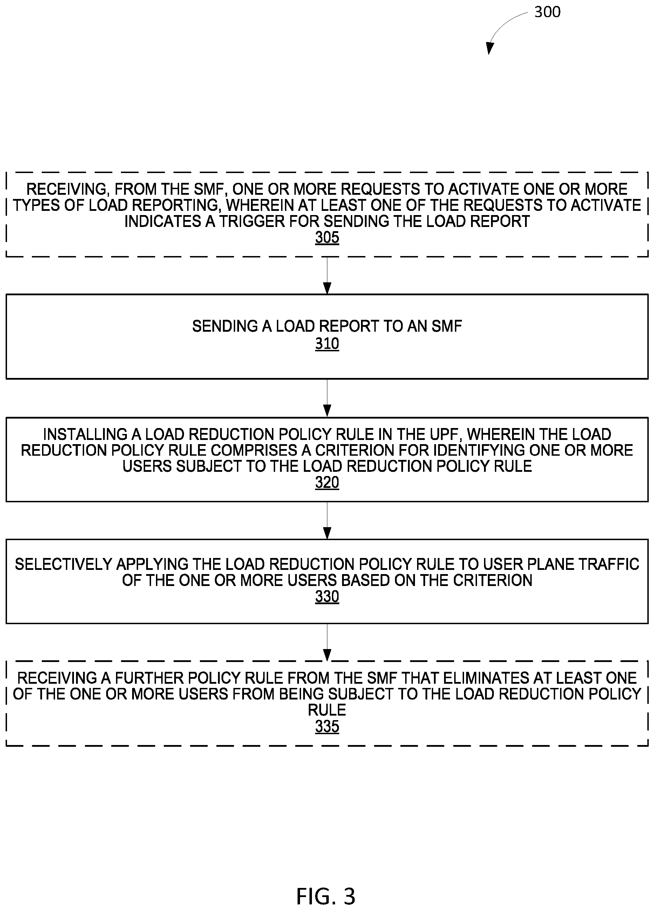

Figure 3 illustrates an example method 300 implemented by a UPF 35 in a wireless communication network 10. The method 300 comprises sending a load report to an SMF 45 (block 310). The method 300 further comprises receiving a load reduction policy rule in response (block 320). The load reduction policy rule comprises a criterion for identifying one or more users subject to the load reduction policy rule. The method 300 further comprises selectively applying the load reduction policy rule to user plane traffic of the one or more users based on the criterion (block 330).

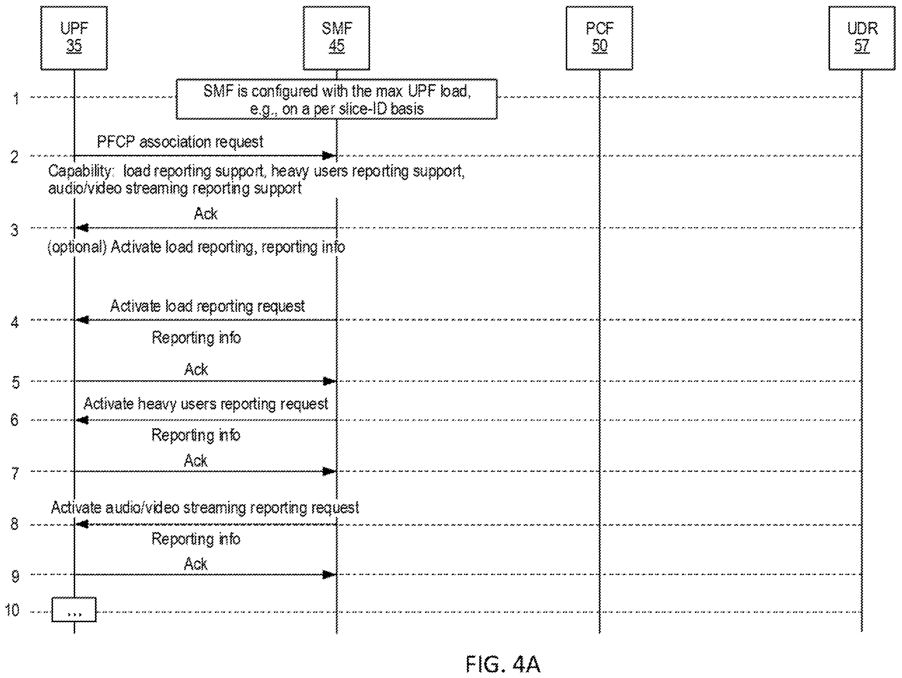

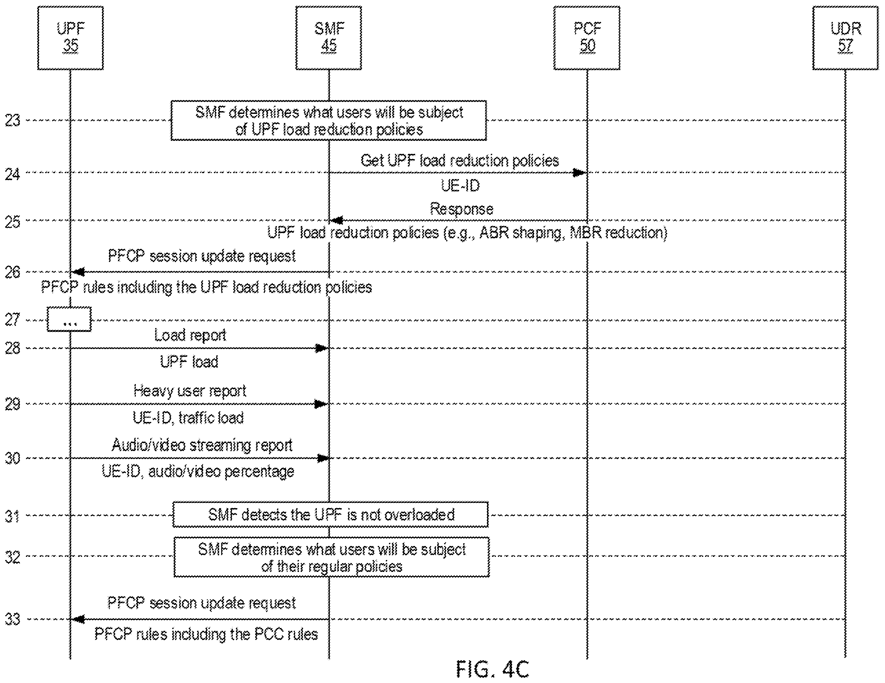

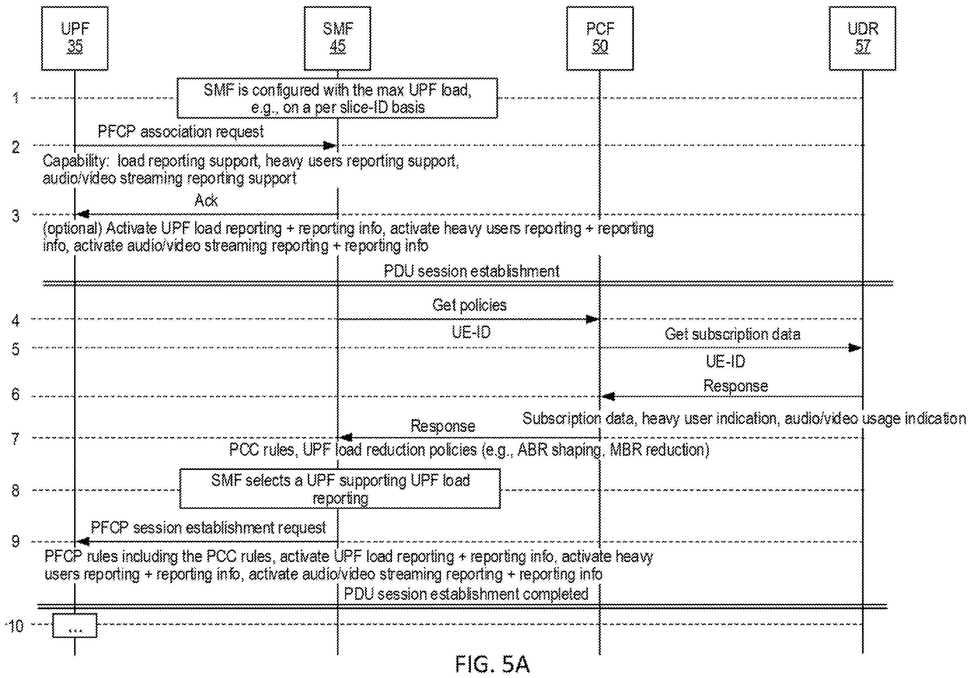

Examples of particular embodiments will now be discussed in a more detailed context with respect to the signaling diagrams of Figures 4A-C and Figures 5A-B, which may be useful (for example) for understanding certain interactions between the SMF 45, UMF 35, PCF 50 and UDR 57.

It should be noted that in the following example embodiments, controlling user plane load may, in some embodiments, be performed for a particular mobile broadband (MBB) slice. In the following example embodiments, the PCF 50 holds suggested policies to be applied to reduce UPF load. For example, for an MBB slice, the PCF 50 may have an ABR shaping policy to be applied to ABR streaming traffic (e.g. to Audio and Video streaming). Additionally or alternatively, the PCF 50 may have a bandwidth limiting policy to be applied to all traffic, but only with respect to Heavy Users. Heavy users are defined as subscribers consuming more than a threshold amount of traffic.

The PCF 50 may additionally or alternatively hold other policies for reducing the UPF load. For example, the PCF 50 may have polices for optimizing one or more protocols. In particular, the PCF 50 may have a TCP Optimization policy that is applied to all TCP traffic and/or a QUIC Optimization policy that is applied to all QUIC traffic.

In the example embodiments described below, it is also registered in the UPF 35 that the UPF 35 supports the Event-IDs: AUDIO_VIDEO_STREAMING; HEAVY_USERS; and/or UPF_LOAD.

Turning to Figure 4A, at step 1, the SMF 45 is configured with a maximum UPF load (e.g., on a per slice-ID basis, in some embodiments). At step 2, the UPF 35 sends a PFCP association request from to the SMF. The PFCP association request may comprise an indication that the UPF 35 supports load reporting. In some particular embodiments, the PFCP association request may indicate that the UPF 35 supports one or more types of load reporting. For example, the PFCP association request may indicate load reporting support overall, with respect to certain types of users (e.g., heavy users), and/or with respect to certain types of traffic (e.g., ABR streaming traffic, such as is commonly used for audio/video (AV) streaming). At step 3, the SMF 45 acknowledges the association request.

The SMF 45 transmits, to the UPF 35, one or more requests to activate load reporting. In some embodiments, one or more such requests are included in the acknowledgement of step 3. Additionally or alternatively, one or more of these requests are sent after the acknowledgment of step 3. For example, the SMF 45 may send a request to activate load reporting (step 4), a request to activate heavy user load reporting (step 6), and/or a request to activate AV streaming load reporting (step 8). The UPF 35 may respond to one or more of the requests with one or more acknowledgements (e.g., respective steps 5, 7, and 9).

In some particular examples, the SMF 45 may be even more specific with respect to what type of load reporting is being requested. For example, in a request for heavy user load reporting, the request may indicate which of a plurality of heavy user categories to report.

Further, one or more of the activation requests may include certain reporting information, e.g., a periodicity such as the reporting period and/or a threshold for triggering reporting, among other things. At step 10, the UPF 35 behaves as configured in the reporting info.

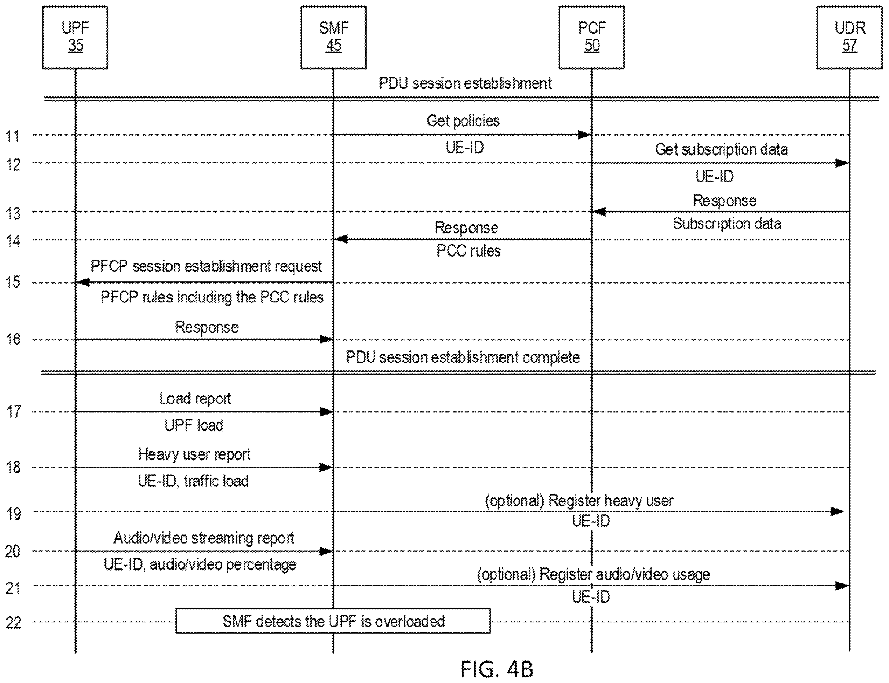

Continuing with reference to Figure 4B, PDU session establishment commences after step 10, and includes steps 11 through 16. At step 11, the SMF 45 requests one or more policies in the form of PCC rules from the PCF 50. The policy request may comprise, in some embodiments, an identifier of a User Equipment (UE) (i.e., a UE-ID). In response, at step 12 the PCF 50 requests subscription data associated with the UE-ID from the UDR 57. At step 13, the UDR responds to the request from the PCF 50 with the requested subscription data. At this point, the subscription data associated with the UE-ID does not include any indication of being associated with a heavy user or a user of AV streaming. Accordingly, at step 14, the PCF 50 responds to the SMF 45 with the requested policies. In particular, since the since the subscription data does not include any indication that the UE-ID corresponds to a heavy user or AV streaming user, the rules provided may be PCC rules that control user plane traffic under regular operating conditions. That is, the PCC rules provided at this point may not be specifically tailored for a user that is considered a heavy user or AV streaming user.

At step 15, the SMF 45 sends a PFCP session establishment request to the UPF 35. The PFCP session establishment request may include one or more PFCP rules and/or one or more of the regular PCC rules. At step 16, the UPF 35 sends a PFCP session establishment response to the SMF 45. According to particular embodiments, at this point, PDU session establishment is complete.

Having been requested to activate load reporting, the UPF 35 monitors UPF load (e.g., CPU and/or memory resources) and reports periodically and/or when the current UPF load is equal to or above a certain threshold (e.g. 70%) (e.g., based on the reporting information included in the activation request and/or an existing configuration of the UPF 35). In this particular example, at step 17 the UPF 35 sends a load report to the SMF 45. The load report includes an indication of overall UPF load.

At step 18 the UPF 35 sends a heavy user load report to the SMF 45. In some embodiments, the heavy user load report indicates what percentage of the total UPF traffic volume is the traffic of heavy users. In some embodiments, the heavy user load report additionally or alternatively includes a list of UE-IDs that correspond to heavy users.

In some embodiments, there are a plurality of different categories of heavy user, e.g., depending on the amount of traffic they generate. For example, there may be a heavy user category, a very heavy user category, an extremely heavy user category, and so on, each of which may be associated with one or more thresholds for determining whether a user generates enough traffic to fall into the category. In some such embodiments, the heavy user load report may pertain to any one or more of the heavy user categories. Accordingly, in some embodiments the heavy user load report may additionally or alternatively include an indication of which of a plurality of heavy user categories the heavy user load report pertains to.

In support of heavy user load reporting, the UPF 35 may detect which UE-IDs are consuming more than a threshold amount of traffic, e.g., using Deep Packet Inspection (DPI) techniques and/or based on reporting information received in the activation message (Step 6, in this example). Alternatively, the threshold amount of traffic required to consider a user a heavy user may be locally configured in the UPF 35 for each heavy user category. As noted above, in some embodiments the UPF 35 may calculate the percentage of heavy users' traffic with respect to the total traffic volume and include the percentage in the heavy users load report. The UPF 35 may additionally or alternatively include the UE-IDs of the relevant heavy users in the heavy users load report.

In some embodiments, the SMF 45 can register the heavy users in the UDR 57, as shown at step 19.

At step 20, the UPF 35 sends an AV streaming load report to the SMF 45. Similarly to the heavy users load report, the AV streaming load report may include what percentage of the total UPF traffic volume is AV streaming traffic. Additionally or alternatively, the AV streaming load report may include a list of UE-IDs corresponding to detected AV streaming traffic. In such embodiments, the UPF 35 may use DPI techniques to detect the AV streaming traffic and calculate the percentage of AV streaming traffic with respect to the total amount of traffic. The UPF 35 may additionally or alternatively determine the UE-IDs for which there is presence of AV streaming traffic using DPI techniques.

In some embodiments, the SMF 45 can register the users for which AV streaming traffic was detected in the UDR 57, as shown at step 21.

It should be noted that the example of Figures 4A-4C includes activation and reporting of three types of load reports. Notwithstanding, other embodiments may include activation and reporting of any number of load reports. Moreover, the activation of particular types of load reporting may be performed in any order, and not just that illustrated in Figures 4A-4C. Similarly, the reporting may be performed in accordance with the reporting information configured in the UPF 35, which may differ from that illustrated in Figures 4A-4C.

At step 22, the SMF 45 detects that the UPF 35 is overloaded based on one or more of the load reports. In response, at step 23, the SMF 45 determines which users will be subject to a UPF load reduction policy.

At step 24, the SMF 45 sends a UPF load reduction policy request to the PCF 50. The UPF load reduction policy request may include, e.g., the UE-ID for the users determined by the SMF 45 to be subject to the UPF load reduction policy. At step 25, in response, the PCF 50 responds to the SMF 45 with one or more UPF load reduction policies. The UPF load reduction policies may include an ABR shaping policy and/or an Multi-bitrate (MBR) reduction policy, for example. For AV streaming traffic, the PCF 50 may determine the ABR shaping level to be applied. For Heavy users, the PCF 50 may determine the bandwidth (BW) limitation level to be applied.

In particular, the PCF 50 may provide policies on a per UE-ID basis. For example, the PCF 50 may provide, for each of the UE-IDs provided in the UPF load reduction policy request, an ABR shaping policy for AV Streaming traffic in the form of a new or updated PCC rule. In this regard, the PCC rule may include an application identifier (e.g., App-ID) that indicates to what the PCC rule pertains (e.g., AV streaming responsive to an overload detected based on an AV streaming load report, all traffic responsive to an overload detected based on a heavy users load report). The PCC rule may additionally or alternatively include a QoS for the controlled traffic. For example, the PCC rule may include a suggested QoS action to be taken, such as by indicating a particular ABR shaping level (e.g., for controlling the traffic of AV streaming users) and/or indicating that a bandwidth limit should be applied (e.g., for controlling the traffic of heavy users).

At step 26, the SMF 45 sends a PFCP session update request to the UPF 35. The PFCP session update request includes one or more PFCP rules. In particular, the PFCP session update request may include one or more UPF load reduction policies (e.g., on a per user or traffic category basis). Each UPF load reduction policy may include a PDR and a QER. For example, a load reduction policy suitable for controlling UPF load with respect to AV Streaming users may include a PDR with PDI set to App-ID=Audio-Video-Streaming, and a QER that indicates ABR-Shaping-Level=X. As another example, a load reduction policy suitable for controlling UPF load with respect to heavy users may include a PDR with PDI set to App-ID=Match all, and a QER that indicates BW-Limit=Y.

Having received the PFCP session update request, at step 27, the UPF 35 behaves as configured in the reporting info while also controlling load in accordance with the load reduction policies. Thus, the UPF 35 sends another load report, heavy user load report, and AV streaming load report at steps 28-30 (respectively) that reflects updated UPF load conditions. As discussed above, the SMF 45, in some embodiments, register users in the UDR 57 that are identified in one or more of the reports as being in a particular class of users (e.g., heavy users, AV streaming users).

At step 31, the SMF 45 determines, based on one or more of the updated load reports that the UPF 35 is not overloaded. In response, at step 32, the SMF 35 determines what users will be subject to regular policies. That is, one or more of the users that were subject to the load reduction policy may be eliminated from being subject to the load reduction policy, and thereby restored to being treated under the typical PCC rules. Accordingly, at step 33, the SMF 45 sends a PFCP session update request to the UPF 35. The PFCP session update request includes PFCP rules including one or more of the regular PCC rules.

Figures 5A-5B illustrate another example of embodiments of the present disclosure. Although the example illustrated in Figures 5A-5B share several features with the example illustrated in Figures 4A-4C, there are some notable differences. For example, in the example of Figures 5A-5B, a load reporting activation request may be included by the SMF 45 in a PFCP association request acknowledgement (step 3) and/or in a PFCP session establishment request (step 9) to the UPF 35. This is in contrast to the individual load reporting activation requests and corresponding acknowledgements depicted in Figure 4A steps 4 through 9, for example. Further, in Figure 5A, the SMF 45 selects a UPF 35 that supports load reporting (e.g., generally, with respect to heavy users, and/or with respect to AV streaming users) during PDU session establishment at step 8.

Also, in the example embodiment of Figures 5A-5B, load reduction policies are obtained by the SMF 45 from the PCC 50 earlier (i.e., in step 7, along with PCC rules) relative to the example of Figures 4A-4C, in which the SMF 45 obtains load reduction policies responsive to detecting that the UPF 35 is overloaded.

Turning to Figure 5A, at step 1, the SMF 45 is configured with a maximum UPF load (e.g., on a per slice-ID basis, in some embodiments). At step 2, the UPF 35 sends a PFCP association request from to the SMF 45. The PFCP association request may comprise an indication that the UPF 35 supports load reporting. In some particular embodiments, the PFCP association request may indicate that the UPF 35 supports one or more types of load reporting. For example, the PFCP association request may indicate load reporting support overall, with respect to certain types of users (e.g., heavy users), and/or with respect to certain types of traffic (e.g., ABR streaming traffic, such as is commonly used for audio/video (AV) streaming). At step 3, the SMF 45 acknowledges the association request. In some embodiments, the SMF 45 transmits, to the UPF 35, one or more requests to activate load reporting in the PFCP association request acknowledgement. For example, the SMF 45 may send a request to activate load reporting, a request to activate heavy user load reporting, and/or a request to activate AV streaming load reporting in the PFCP association request acknowledgement.

As discussed above, the SMF 45 may be particularly specific with respect to what type of load reporting is being requested. For example, in a request for heavy user load reporting, the request may indicate which of a plurality of heavy user categories to report.

Further, the activation request may include certain reporting information with respect to each of the activated load reporting types, e.g., a periodicity such as the reporting period and/or a threshold for triggering reporting.

PDU session establishment commences after step 3, and includes steps 4 through 9. At step 4, the SMF 45 requests one or more policies from the PCF 50. The policy request may comprise, in some embodiments, an identifier of a UE-ID. In response, at step 5 the PCF 50 requests subscription data associated with the UE-ID from the UDR 57. At step 6, the UDR 57 responds to the request from the PCF 50 with the requested subscription data. In some embodiments, the UDR 57 may also respond with an indication that the user associated with the UE-ID is a heavy user and/or an AV streaming user.

In view of the subscriber information obtained from the UDR 57, at step 7 the PCF 50 responds to the SMF 45 with the requested policies. In particular, since the since the subscription data in this example indicates whether the UE-ID corresponds to a heavy user and/or AV streaming user, the rules provided may include PCC rules that control user plane traffic under regular operating conditions and may also include a load reduction policy for the particular type of user. That is, for an AV streaming user, the PCF 50 may determine the ABR shaping level to be applied. For a heavy user, the PCF 50 may determine the BW limitation level to be applied. In either case, the PCF 50 may provide a corresponding load reduction policy, e.g., on a per UE-ID basis.

In particular, for each UE-ID in which a user is detected to be an AV streaming user, the PCF 50 may provide a PCC rule that includes an App-ID=Audio-Video-Streaming, and a QoS that includes a Suggested-QoS-Action of ABR-Shaping-Level=X.

For each UE-ID in which a user is detected to be a heavy user, the PCF 50 may provide a PCC rule that includes an App-ID=Match all, and a QoS that includes a Suggested-QoS-Action that indicates BW-Limit=Y.

At step 8, the SMF selects a UPF 35 that supports UPF load reporting, heavy user load reporting, and/or AV streaming load reporting.

At step 9, the SMF 45 sends a PFCP session establishment request to the UPF 35. The PFCP session establishment request may include one or more PFCP rules, including the regular PCC rules. In some embodiments, the SMF 45 may also include activation requests for one or more of the different types of load reporting supported by the UPF 35, as well as corresponding reporting information to configure a periodicity and/or threshold trigger for reporting. Note that sending an activation request in step 9 may be omitted in many embodiments that include sending an activation request earlier, e.g., in step 3.

At this point, PDU session establishment is complete. Having been requested to activate load reporting, at step 10 the UPF 35 monitors UPF load (e.g., CPU and/or memory resources) and will report periodically and/or when the current UPF load is equal to or above a certain threshold (e.g. 70%) (e.g., based on the reporting information included in the activation request and/or an existing configuration of the UPF 35) as will be explained below.

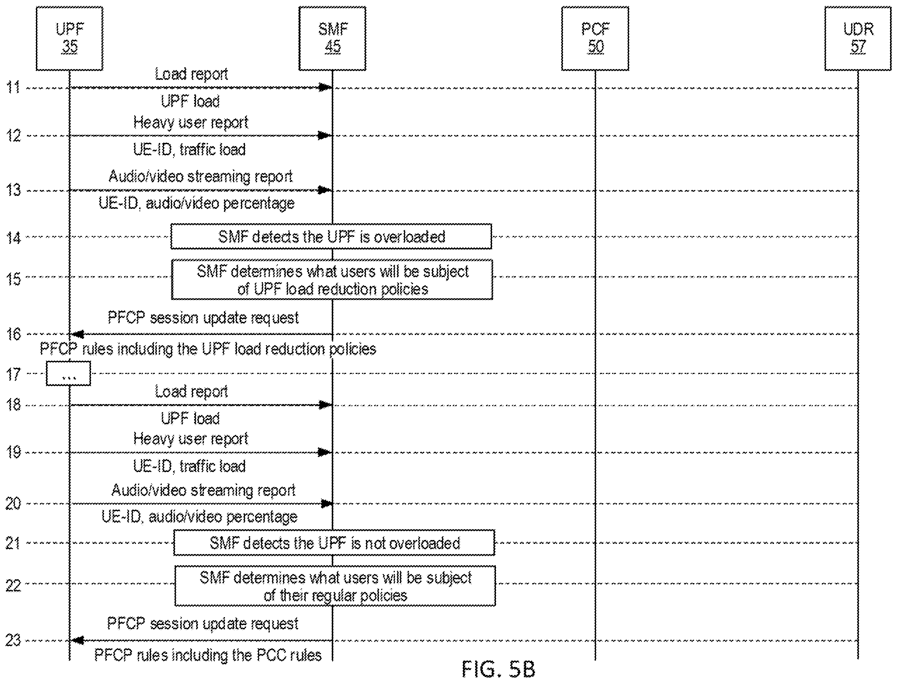

Turning to Figure 5B, at step 11 the UPF 35 sends a load report to the SMF 45. The load report includes an indication of overall UPF load. At step 12, the UPF 35 sends a heavy user load report to the SMF 45. At step 13, the UPF 35 sends an AV streaming load report to the SMF 45. Each of the load reports sent in steps 11-13 may have been sent in response to criteria in the reporting information being met (e.g., load above a threshold, periodic expiration of a timer).

With respect to the heavy user load report, as discussed above, in some embodiments the heavy user load report indicates what percentage of the total UPF traffic volume is the traffic of heavy users. In some embodiments, the heavy user load report additionally or alternatively includes a list of UE-IDs that correspond to heavy users. In this regard, the UPF 35 may detect which UE-IDs are consuming more than a threshold amount of traffic, e.g., using DPI techniques and/or based on reporting information received in the activation message. As in the previous example, the SMF 45 may also, in some embodiments, register the heavy users in the UDR 57 (not shown).

With respect to the AV streaming load report, the AV streaming load report may include what percentage of the total UPF traffic volume is AV streaming traffic. Additionally or alternatively, the AV streaming load report may include a list of UE-IDs corresponding to detected AV streaming traffic. In such embodiments, the UPF 35 may use DPI techniques to detect the AV streaming traffic and calculate the percentage of AV streaming traffic with respect to the total amount of traffic. The UPF 35 may additionally or alternatively determine the UE-IDs for which there is presence of AV streaming traffic using DPI techniques. As in the previous example, the SMF 454 may also register the users for which AV streaming traffic was detected in the UDR 57 (not shown).

It should be noted that the example of Figures 5A-5B includes activation and reporting of three types of load reports. Notwithstanding, other embodiments may include activation and reporting of any number of different types of load reports. Moreover, the activation of particular types of load reporting may be performed in any order, and not just that illustrated in Figures 5A-5B.

At step 14, the SMF 45 detects that the UPF 35 is overloaded based on one or more of the load reports. In response, at step 15, the SMF 45 determines which users will be subject to a UPF load reduction policy.

At step 16, the SMF 45 sends a PFCP session update request to the UPF 35. The PFCP session update request includes one or more PFCP rules. These PFCP rules may include one or more UPF load reduction policies (e.g., on a per user or traffic category basis). Each UPF load reduction policy may include a PDR and a QER. For example, a load reduction policy suitable for controlling UPF load with respect to AV Streaming users may include a PDR with PDI set to App-ID=Audio-Video-Streaming, and a QER that indicates ABR-Shaping-Level=X. As another example, a load reduction policy suitable for controlling UPF load with respect to heavy users may include a PDR with PDI set to App-ID=Match all, and a QER that indicates BW-Limit=Y.

Having received the PFCP session update request, at step 17, the UPF 35 behaves as configured in the reporting info while also controlling load in accordance with the load reduction policies. Accordingly, the UPF 35 sends another load report, heavy user load report, and AV streaming load report at steps 18-20 (respectively) that reflects updated UPF load conditions. As discussed above, the SMF 45, in some embodiments, register users in the UDR 57 that are identified in one or more of the reports as being in a particular class of users (e.g., heavy users, AV streaming users) (not shown).

At step 21, the SMF 45 determines, based on one or more of the updated load reports that the UPF 35 is not overloaded. In response, at step 22, the SMF 35 determines what users will be subject to regular policies. That is, one or more of the users that were subject to the load reduction policy may be eliminated from being subject to the load reduction policy, and thereby restored to being treated under the typical PCC rules. Accordingly, at step 23, the SMF 45 sends a PFCP session update request to the UPF 35. The PFCP session update request includes PFCP rules including one or more of the regular PCC rules.

Although the examples discussed above describe embodiments in terms of a 5G wireless communication network, other embodiments may be implemented by network nodes of a 4G wireless communication network. In such embodiments, the PCF 50 is replaced by a Policy and Charging Rules Function (PCRF). The SMF 45 is replaced by a Packet Data Network (PDN) Gateway Control plane function (PGW-C) or Traffic Detection Function Control plane function (TDF-C). The UPF 35 is replaced by a PDN Gateway User plane function (PGW-U) or Traffic Detection Function User plane function (TDF-U).

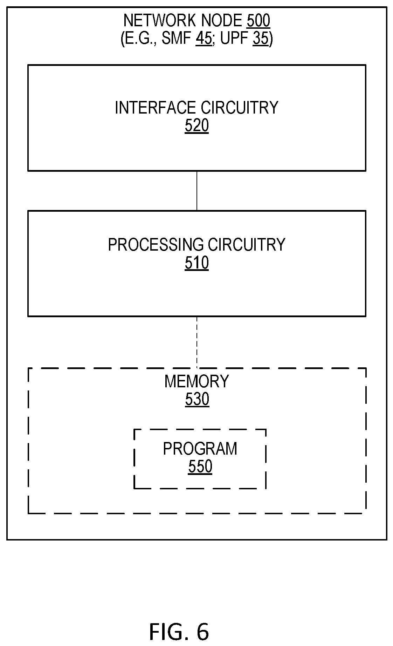

Other embodiments of the present disclosure include the network node 500 implemented according to the hardware illustrated in Figure 6. The example hardware of Figure 6 comprises processing circuitry 510, memory circuitry 530, and interface circuitry 520. The processing circuitry 510 is communicatively coupled to the memory circuitry 530 and the interface circuitry 520, e.g., via one or more buses. The processing circuitry 510 may comprise one or more microprocessors, microcontrollers, hardware circuits, discrete logic circuits, hardware registers, digital signal processors (DSPs), field-programmable gate arrays (FPGAs), application-specific integrated circuits (ASICs), or a combination thereof. For example, the processing circuitry 510 may be programmable hardware capable of executing software instructions stored, e.g., as a machine-readable computer program 550 in the memory circuitry 530. The memory circuitry 530 of the various embodiments may comprise any non-transitory machine-readable media known in the art or that may be developed, whether volatile or nonvolatile, including but not limited to solid state media (e.g., SRAM, DRAM, DDRAM, ROM, PROM, EPROM, flash memory, solid state drive, etc.), removable storage devices (e.g., Secure Digital (SD) card, miniSD card, microSD card, memory stick, thumb-drive, USB flash drive, ROM cartridge, Universal Media Disc), fixed drive (e.g., magnetic hard disk drive), or the like, wholly or in any combination.

The interface circuitry 520 may be a controller hub configured to control the input and output (I/O) data paths of the computing device 110. Such I/O data paths may include data paths for exchanging signals over a communications network 105 and data paths for exchanging signals with a user. For example, the interface circuitry 520 may comprise a transceiver configured to send and receive communication signals over one or more of a cellular network, Ethernet network, or optical network.

The interface circuitry 520 may be implemented as a unitary physical component, or as a plurality of physical components that are contiguously or separately arranged, any of which may be communicatively coupled to any other, or may communicate with any other via the processing circuitry 510. For example, the interface circuitry 520 may comprise output circuitry (e.g., transmitter circuitry configured to send communication signals over the communications network 10) and input circuitry (e.g., receiver circuitry configured to receive communication signals over the communications network 10). Other examples, permutations, and arrangements of the above and their equivalents will be readily apparent to those of ordinary skill.

According to particular embodiments of the hardware illustrated in Figure 6, the network node 500 is an SMF 45 in a wireless communication network 10. In some such embodiments, the interface circuitry 520 is configured to receive a load report from a UPF 35. The processing circuitry 710 is configured to, responsive to receiving the load report from the UPF 35 via the interface circuitry 520, install a load reduction policy rule in the UPF 35. The load reduction policy rule comprises a criterion for identifying one or more users subject to the load reduction policy rule.

According to some other embodiments of the hardware illustrated in Figure 6, the network node 500 is a UPF 35 in a wireless communication network 10. In some such embodiments, the processing circuitry 710 is configured to send a load report via the interface circuitry 520 to an SMF 45, and receive a load reduction policy rule via the interface circuitry 520 in response. The load reduction policy rule comprises a criterion for identifying one or more users subject to the load reduction policy rule. The processing circuitry 520 is further configured to selectively apply the load reduction policy rule to user plane traffic of the one or more users based on the criterion.

Other embodiments include the computer program 550. The computer program comprises instructions which, when executed on processing circuitry 510 of a network node 500 cause the processing circuitry 510 to carry out any of the methods and/or processing described above (e.g., the method 200).

Other embodiments include a carrier containing the computer program 550. The carrier is one of an electronic signal, optical signal, radio signal, or computer readable storage medium. In some particular embodiments, the computer readable storage medium is non-transitory.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A method (200), implemented in a Session Management Function, SMF (45), in a wireless communication network (10), the method comprising:
responsive to receiving (210) a load report from a User Plane Function, UPF (35), installing (220) a load reduction policy rule in the UPF (35);
wherein the load reduction policy rule comprises a criterion for identifying one or more users subject to the load reduction policy rule,
wherein (i) the load report indicates, for each of one or more user categories, a respective amount of load on the UPF (35) caused by the user category and/or
wherein (ii) the load report comprises a list of user identifiers corresponding to users responsible for load indicated in the load report.

2. The method of claim 1, further comprising sending, to the UPF (35), one or more requests to activate one or more types of load reporting, wherein at least one of the requests to activate indicates a trigger for sending the load report and, optionally,
the method further comprising registering, in a Unified Data Repository, UDR (57), the one or more users as being of a user type that corresponds to a type of load reporting of the load report.

3. The method of claim 2, wherein the one or more requests to activate the one or more types of load reporting comprises a request to activate reporting of load caused by Audio/Video streaming and/or
wherein the one or more requests to activate the one or more types of load reporting comprises a request to activate reporting of load caused by heavy users, wherein heavy users are defined as subscribers consuming more than a threshold amount of traffic.

4. The method of any one of claims 2-3, further comprising receiving a Packet Forwarding Control Protocol, PFCP, association request from the UPF (35), wherein the PFCP association request indicates that the UPF (35) supports providing the load report and, optionally,
wherein at least one of the requests to activate is comprised in an acknowledgement to the PFCP association request.

5. The method of any one of claims 2-4, further comprising sending, to the UPF (35) a PFCP session establishment request comprising one or more Policy and Charging Control, PCC, rules, wherein installing the load reduction policy rule in the UPF (35) comprises fetching the load reduction policy rule from a Policy Control Function, PCF, (50) of the wireless communication network (10) and sending the load reduction policy rule to the UPF (35) in a PFCP session update request to update the PCC rules and, optionally,
wherein at least one of the requests to activate is comprised in the PFCP session establishment request.

6. The method of any one of claims 1-5, wherein installing the load reduction policy rule in the UPF is responsive to determining that the UPF (35) is overloaded based on the load report and/or
the method further comprising after having installed the load reduction policy rule, determining that the UPF (35) is not overloaded, and in response, installing a further policy rule in the UPF (35) that eliminates at least one of the one or more users from being subject to the load reduction policy rule and/or
wherein the criterion for identifying one or more users subject to the load reduction policy rule comprises an indication that the load reduction policy rule applies to users that consume more than a threshold amount of bandwidth and/or
wherein the criterion for identifying one or more users subject to the load reduction policy rule comprises an indication that the load reduction policy rule applies to users that are Audio/Video streaming.

7. A Session Management Function, SMF (45) configured to:
responsive to receiving a load report from a User Plane Function, UPF (35), install a load reduction policy rule in the UPF (35);
wherein the load reduction policy rule comprises a criterion for identifying one or more users subject to the load reduction policy rule,
wherein (i) the load report indicates, for each of one or more user categories, a respective amount of load on the UPF (35) caused by the user category and/or
wherein (ii) the load report comprises a list of user identifiers corresponding to users responsible for load indicated in the load report.

8. A method (300), implemented in a User Plane Function, UPF (35), in a wireless communication network (10), the method comprising:
sending (310) a load report to a Session Management Function, SMF (45), and receiving (320) a load reduction policy rule in response, wherein the load reduction policy rule comprises a criterion for identifying one or more users subject to the load reduction policy rule;
selectively applying (330) the load reduction policy rule to user plane traffic of the one or more users based on the criterion,
wherein (i) the load report indicates, for each of one or more user categories, a respective amount of load on the UPF (35) caused by the user category, and/or
wherein (ii) the load report comprises a list of user identifiers corresponding to users responsible for load indicated in the load report.

9. The method of claim 8, further comprising receiving, from the SMF (45), one or more requests to activate one or more types of load reporting, wherein at least one of the requests to activate indicates a trigger for sending the load report and, optionally,
wherein the one or more requests to activate the one or more types of load reporting comprises a request to activate reporting of load caused by Audio/Video streaming and/or
wherein the one or more requests to activate the one or more types of load reporting comprises a request to activate reporting of load caused by heavy users, wherein heavy users are defined as subscribers consuming more than a threshold amount of traffic.

10. The method of claim 9, further comprising sending a Packet Forwarding Control Protocol, PFCP, association request to the SMF (45), wherein the PFCP association request indicates that the UPF (35) supports providing the load report and, optionally,
wherein at least one of the requests to activate is comprised in an acknowledgement to the PFCP association request.

11. The method of any one of claims 9-10, further comprising:
receiving, from the SMF (45), a PFCP session establishment request comprising one or more Policy and Charging Control, PCC, rules;
receiving the load reduction policy rule from the SMF (45) in a PFCP session update request to update the PCC rules; and
updating the PCC rules responsive to the PFCP session update request and, optionally,
wherein at least one of the requests to activate is comprised in the PFCP session establishment request.

12. The method of any one of claims 9-11, wherein receiving the load reduction policy rule comprises receiving the load reduction policy rule responsive to the load report indicating the UPF (35) is overloaded and/or
the method further comprising after having received the load reduction policy rule, receiving a further policy rule from the SMF (45) that eliminates at least one of the one or more users from being subject to the load reduction policy rule and/or
wherein the criterion for identifying one or more users subject to the load reduction policy rule comprises an indication that the load reduction policy rule applies to users that consume more than a threshold amount of bandwidth and/or
wherein the criterion for identifying one or more users subject to the load reduction policy rule comprises an indication that the load reduction policy rule applies to users that are Audio/Video streaming.

13. A User Plane Function, UPF (35) configured to:
send a load report to a Session Management Function, SMF (45), and receive a load reduction policy rule in response, wherein the load reduction policy rule comprises a criterion for identifying one or more users subject to the load reduction policy rule;
selectively apply the load reduction policy rule to user plane traffic of the one or more users based on the criterion,
wherein (i) the load report indicates, for each of one or more user categories, a respective amount of load on the UPF (35) caused by the user category, and/or
wherein (ii) the load report comprises a list of user identifiers corresponding to users responsible for load indicated in the load report.

14. A computer program (550), comprising instructions which, when executed on processing circuitry (510) of a network node (500) cause the processing circuitry (510) to carry out the method according to any one of claims 1-6 or 8-12.

15. A carrier containing the computer program of the preceding claim, wherein the carrier is one of an electronic signal, optical signal, radio signal, or computer readable storage medium.

## Patentansprüche

1. Verfahren (200), das in einer Sitzungsverwaltungsfunktion, SMF, (45) in einem Drahtloskommunikationsnetzwerk (10) implementiert wird, wobei das Verfahren Folgendes umfasst:
in Reaktion auf das Empfangen (210) eines Lastberichts von einer Benutzerebenenfunktion, UPF, (35) Installieren (220) einer Lastreduzierungsrichtlinienregel in der UPF (35);
wobei die Lastreduzierungsrichtlinienregel ein Kriterium zum Identifizieren eines oder mehrerer der Lastreduzierungsrichtlinienregel unterworfener Benutzer umfasst,
wobei (i) der Lastbericht für jede einer oder mehrerer Benutzerkategorien eine jeweilige Menge an Last der UPF (35) angibt, die durch die Benutzerkategorie verursacht wird, und/oder
wobei (ii) der Lastbericht eine Liste von Benutzerkennungen umfasst, die Benutzern entsprechen, die für die in dem Lastbericht angegebene Last verantwortlich sind.

2. Verfahren nach Anspruch 1, ferner umfassend Senden einer oder mehrerer Anforderungen zum Aktivieren eines oder mehrerer Typen von Lastberichterstattung an die UPF (35), wobei mindestens eine der Anforderungen zum Aktivieren einen Auslöser zum Senden des Lastberichts angibt, und optional
wobei das Verfahren ferner Anmelden des einen oder der mehreren Benutzer als Benutzertyp, der einem Typ von Lastberichterstattung des Lastberichts entspricht, in einem einheitlichen Datenrepository, UDR, (57) umfasst.

3. Verfahren nach Anspruch 2, wobei die eine oder die mehreren Anforderung zum Aktivieren des einen oder der mehreren Typen von Lastberichterstattung eine Anforderung zum Aktivieren der Meldung einer Last umfasst, die durch Audio-Video-Streaming verursacht wird, und/oder
wobei die eine oder die mehreren Anforderungen zum Aktivieren des einen oder der mehreren Typen von Lastberichterstattung eine Anforderung zum Aktivieren der Meldung einer Last umfasst, die durch Vielnutzer verursacht wird, wobei Vielnutzer als Teilnehmer definiert sind, die mehr als eine Schwellenmenge an Verkehr konsumieren.

4. Verfahren nach einem der Ansprüche 2-3, ferner umfassend Empfangen einer Packet Forwarding Control Protocol-Zuordnungsanforderung, PFCP-Zuordnungsanforderung, von der UPF (35), wobei die PFCP-Zuordnungsanforderung angibt, dass die UPF (35) Bereitstellung des Lastberichts unterstützt, und optional
wobei mindestens eine der Anforderungen zum Aktivieren in einer Bestätigung der PFCP-Zuordnungsanforderung umfasst ist.

5. Verfahren nach einem der Ansprüche 2-4, ferner umfassend Senden einer PFCP-Sitzungsaufbauanforderung, die eine oder mehreren Policy and Charging Control-Regeln, PCC-Regeln, umfasst, an die UPF (35), wobei das Installieren der Lastreduzierungsrichtlinienregel in der UPF (35) Abrufen der Lastreduzierungsrichtlinienregel von einer Policy Control Function, PCF, (50) des Drahtloskommunikationsnetzwerks (10) und Senden der Lastreduzierungsrichtlinienregel in einer PFCP-Sitzungsaktualisierungsanforderung zum Aktualisieren der PCC-Regeln an die UPF (35) umfasst, und optional
wobei mindestens eine der Anforderungen zum Aktivieren in der PFCP-Sitzungsaufbauanforderung umfasst ist.

6. Verfahren nach einem der Ansprüche 1-5, wobei das Installieren der Lastreduzierungsrichtlinienregel in der UPF in Reaktion auf ein Bestimmen basierend auf dem Lastbericht erfolgt, dass die UPF (35) überlastet ist, und/oder
das Verfahren ferner nach dem Installieren der Lastreduzierungsrichtlinienregel Bestimmen, dass die UPF (35) nicht überlastet ist, und in Reaktion darauf Installieren einer weiteren Richtlinienregel in der UPF (35) umfasst, die mindestens einen des einen oder der mehreren Benutzer davon ausnimmt, der Lastreduzierungsrichtlinienregel unterworfen zu werden, und/oder
wobei das Kriterium zum Identifizieren eines oder mehrerer der Lastreduzierungsrichtlinienregel unterworfener Benutzer eine Angabe umfasst, dass die Lastreduzierungsrichtlinienregel für Benutzer gilt, die mehr als eine Schwellenmenge an Bandbreite konsumieren, und/oder
wobei das Kriterium zum Identifizieren eines oder mehrerer der Lastreduzierungsrichtlinienregel unterworfener Benutzer eine Angabe umfasst, dass die Lastreduzierungsrichtlinienregel für Benutzer gilt, die Audio/Video streamen.

7. Sitzungsverwaltungsfunktion, SMF, (45), die zu Folgendem ausgelegt ist:
in Reaktion auf das Empfangen eines Lastberichts von einer Benutzerebenenfunktion, UPF, (35) Installieren einer Lastreduzierungsrichtlinienregel in der UPF (35);
wobei die Lastreduzierungsrichtlinienregel ein Kriterium zum Identifizieren eines oder mehrerer der Lastreduzierungsrichtlinienregel unterworfener Benutzer umfasst,
wobei (i) der Lastbericht für jede einer oder mehrerer Benutzerkategorien eine jeweilige Menge an Last der UPF (35) angibt, die durch die Benutzerkategorie verursacht wird, und/oder
wobei (ii) der Lastbericht eine Liste von Benutzerkennungen umfasst, die Benutzern entsprechen, die für die in dem Lastbericht angegebene Last verantwortlich sind.

8. Verfahren (300), das in einer Benutzerebenenfunktion, UPF, (35) in einem Drahtloskommunikationsnetzwerk (10) implementiert wird, wobei das Verfahren Folgendes umfasst:
Senden (310) eines Lastberichts an eine Sitzungsverwaltungsfunktion, SMF, (45) und in Reaktion darauf Empfangen (320) einer Lastreduzierungsrichtlinienregel, wobei die Lastreduzierungsrichtlinienregel ein Kriterium zum Identifizieren eines oder mehrerer der Lastreduzierungsrichtlinienregel unterworfener Benutzer umfasst;
selektives Anwenden (330) der Lastreduzierungsrichtlinienregel auf Benutzerebenenverkehr des einen oder der mehreren Benutzer basierend auf dem Kriterium,
wobei (i) der Lastbericht für jede einer oder mehrerer Benutzerkategorien eine jeweilige Menge an Last der UPF (35) angibt, die durch die Benutzerkategorie verursacht wird, und/oder
wobei (ii) der Lastbericht eine Liste von Benutzerkennungen umfasst, die Benutzern entsprechen, die für die in dem Lastbericht angegebene Last verantwortlich sind.

9. Verfahren nach Anspruch 8, ferner umfassend Empfangen einer oder mehrerer Anforderungen zum Aktivieren eines oder mehrerer Typen von Lastberichterstattung von der SMF (45), wobei mindestens eine der Anforderungen zum Aktivieren einen Auslöser zum Senden des Lastberichts angibt, und optional
wobei die eine oder die mehreren Anforderungen zum Aktivieren des einen oder der mehreren Typen von Lastberichterstattung eine Anforderung zum Aktivieren der Meldung einer Last umfasst, die durch Audio-Video-Streaming verursacht wird, und/oder
wobei die eine oder die mehreren Anforderung zum Aktivieren des einen oder der mehreren Typen von Lastberichterstattung eine Anforderung zum Aktivieren der Meldung einer Last umfasst, die durch Vielnutzer verursacht wird, wobei Vielnutzer als Teilnehmer definiert sind, die mehr als eine Schwellenmenge an Verkehr konsumieren.

10. Verfahren nach Anspruch 9, ferner umfassend Senden einer Packet Forwarding Control Protocol-Zuordnungsanforderung, PFCP-Zuordnungsanforderung, an die SMF (45), wobei die PFCP-Zuordnungsanforderung angibt, dass die UPF (35) Bereitstellung des Lastberichts unterstützt, und optional
wobei mindestens eine der Anforderungen zum Aktivieren in einer Bestätigung der PFCP-Zuordnungsanforderung umfasst ist.

11. Verfahren nach einem der Ansprüche 9-10, ferner umfassend:
Empfangen einer PFCP-Sitzungsaufbauanforderung, die eine oder mehrere Policy and Charging Control-Regeln, PCC-Regeln, umfasst, von der SMF (45);
Empfangen der Lastreduzierungsrichtlinienregel von der SMF (45) in einer PFCP-Sitzungsaktualisierungsanforderung zum Aktualisieren der PCC-Regeln; und
Aktualisieren der PCC-Regeln in Reaktion auf die PFCP-Sitzungsaktualisierungsanforderung und optional
wobei mindestens eine der Anforderungen zum Aktivieren in der PFCP-Sitzungsaufbauanforderung umfasst ist.

12. Verfahren nach einem der Ansprüche 9-11, wobei das Empfangen der Lastreduzierungsrichtlinienregel Empfangen der Lastreduzierungsrichtlinienregel in Reaktion darauf umfasst, dass der Lastbericht angibt, dass die UPF (35) überlastet ist, und/oder
das Verfahren ferner nach dem Installieren der Lastreduzierungsrichtlinienregel Empfangen einer weiteren Richtlinienregel von der SMF (45) umfasst, die mindestens einen des einen oder der mehreren Benutzer davon ausnimmt, der Lastreduzierungsrichtlinienregel unterworfen zu werden, und/oder
wobei das Kriterium zum Identifizieren eines oder mehrerer der Lastreduzierungsrichtlinienregel unterworfener Benutzer eine Angabe umfasst, dass die Lastreduzierungsrichtlinienregel für Benutzer gilt, die mehr als eine Schwellenmenge an Bandbreite konsumieren, und/oder
wobei das Kriterium zum Identifizieren eines oder mehrerer der Lastreduzierungsrichtlinienregel unterworfener Benutzer eine Angabe umfasst, dass die Lastreduzierungsrichtlinienregel für Benutzer gilt, die Audio/Video streamen.

13. Benutzerebenenfunktion, UPF, (35), die zu Folgendem ausgelegt ist:
Senden eines Lastberichts an eine Sitzungsverwaltungsfunktion, SMF, (45) und in Reaktion darauf Empfangen einer Lastreduzierungsrichtlinienregel, wobei die Lastreduzierungsrichtlinienregel ein Kriterium zum Identifizieren eines oder mehrerer der Lastreduzierungsrichtlinienregel unterworfener Benutzer umfasst;
selektives Anwenden der Lastreduzierungsrichtlinienregel auf Benutzerebenenverkehr des einen oder der mehreren Benutzer basierend auf dem Kriterium,
wobei (i) der Lastbericht für jede einer oder mehrerer Benutzerkategorien eine jeweilige Menge an Last der UPF (35) angibt, die durch die Benutzerkategorie verursacht wird, und/oder
wobei (ii) der Lastbericht eine Liste von Benutzerkennungen umfasst, die Benutzern entsprechen, die für die in dem Lastbericht angegebene Last verantwortlich sind.

14. Computerprogramm (550), umfassend Anweisungen, die bei Ausführung auf Verarbeitungsschaltungsanordnung (510) eines Netzwerkknotens (500) die Verarbeitungsschaltungsanordnung (510) zum Durchführen des Verfahrens nach einem der Ansprüche 1-6 oder 8-12 veranlassen.

15. Datenträger, der das Computerprogramm nach dem vorhergehenden Anspruch enthält, wobei der Datenträger eines von einem elektronischen Signal, einem optischen Signal, einem Funksignal oder einem computerlesbaren Speichermedium ist.

## Revendications

1. Procédé (200), mis en œuvre dans une fonction de gestion de session, SMF (45), dans un réseau de communication sans fil (10), le procédé comprenant :
en réponse à la réception (210) d'un rapport de charge depuis une fonction de plan utilisateur, UPF (35), l'installation (220) d'une règle de politique de réduction de charge dans l'UPF (35) ;
dans lequel la règle de politique de réduction de charge comprend un critère d'identification d'un ou plusieurs utilisateurs soumis à la règle de politique de réduction de charge,
dans lequel (i) le rapport de charge indique, pour chacune d'une ou plusieurs catégories d'utilisateurs, une quantité respective de charge sur l'UPF (35) provoquée par la catégorie d'utilisateurs et/ou
dans lequel (ii) le rapport de charge comprend une liste d'identifiants d'utilisateurs correspondant à des utilisateurs responsables d'une charge indiquée dans le rapport de charge.

2. Procédé selon la revendication 1, comprenant en outre l'envoi, à l'UPF (35), d'une ou plusieurs demandes d'activation d'un ou plusieurs types de rapport de charge, dans lequel au moins l'une des demandes d'activation indique un déclenchement d'envoi du rapport de charge, et facultativement
le procédé comprenant en outre l'enregistrement, dans un référentiel de données unifié, UDR (57), du ou des utilisateurs comme étant d'un type d'utilisateur qui correspond à un type de rapport de charge du rapport de charge.

3. Procédé selon la revendication 2, dans lequel la ou les demandes d'activation du ou des types de rapport de charge comprend une demande d'activation de rapport de charge provoquée par un streaming audio/vidéo et/ou
dans lequel la ou les demandes d'activation du ou des types de rapport de charge comprend une demande d'activation de rapport de charge provoquée par de gros utilisateurs, dans lequel de gros utilisateurs sont définis comme des abonnés consommant plus qu'une quantité seuil de trafic.

4. Procédé selon l'une quelconque des revendications 2 et 3, comprenant en outre la réception d'une demande d'association de protocole de commande de transfert de paquets, PFCP, depuis l'UPF (35), dans lequel la demande d'association PFCP indique que l'UPF (35) prend en charge la fourniture du rapport de charge, et facultativement
dans lequel au moins l'une des demandes d'activation est comprise dans un accusé de réception de la demande d'association PFCP.

5. Procédé selon l'une quelconque des revendications 2 à 4, comprenant en outre l'envoi, à l'UPF (35), d'une demande d'établissement de session PFCP comprenant une ou plusieurs règles de commande de facturation et de politique, PCC, dans lequel l'installation de la règle de politique de réduction de charge dans l'UPF (35) comprend la récupération de la règle de politique de réduction de charge auprès d'une fonction de commande de politique, PCF, (50) du réseau de communication sans fil (10) et l'envoi de la règle de politique de réduction de charge à l'UPF (35) dans une demande de mise à jour de session PFCP pour mettre à jour les règles PCC, et facultativement
dans lequel au moins l'une des demandes d'activation est comprise dans la demande d'établissement de session PFCP.

6. Procédé selon l'une quelconque des revendications 1 à 5, dans lequel l'installation de la règle de politique de réduction de charge dans l'UPF est en réponse à la détermination que l'UPF (35) est surchargée sur la base du rapport de charge et/ou
le procédé comprenant en outre, après l'installation de la règle de politique de réduction de charge, la détermination que l'UPF (35) n'est pas surchargée et, en réponse à cela, l'installation d'une autre règle de politique dans l'UPF (35) qui fait en sorte qu'au moins l'un du ou des utilisateurs ne soit pas soumis à la règle de politique de réduction de charge et/ou
dans lequel le critère d'identification d'un ou plusieurs utilisateurs soumis à la règle de politique de réduction de charge comprend une indication que la règle de politique de réduction de charge s'applique à des utilisateurs qui consomment plus qu'une quantité seuil de bande passante et/ou
dans lequel le critère d'identification d'un ou plusieurs utilisateurs soumis à la règle de politique de réduction de charge comprend une indication que la règle de politique de réduction de charge s'applique à des utilisateurs qui utilisent un streaming audio/vidéo.

7. Fonction de gestion de session, SMF (45), configurée pour :
en réponse à la réception d'un rapport de charge depuis une fonction de plan utilisateur, UPF (35), installer une règle de politique de réduction de charge dans l'UPF (35) ;
dans laquelle la règle de politique de réduction de charge comprend un critère d'identification d'un ou plusieurs utilisateurs soumis à la règle de politique de réduction de charge,
dans laquelle (i) le rapport de charge indique, pour chacune d'une ou plusieurs catégories d'utilisateurs, une quantité respective de charge sur l'UPF (35) provoquée par la catégorie d'utilisateurs et/ou
dans laquelle (ii) le rapport de charge comprend une liste d'identifiants d'utilisateurs correspondant à des utilisateurs responsables d'une charge indiquée dans le rapport de charge.

8. Procédé (300), mis en œuvre dans une fonction de plan utilisateur, UPF (35), dans un réseau de communication sans fil (10), le procédé comprenant :
l'envoi (310) d'un rapport de charge à une fonction de gestion de session, SMF (45), et, en réponse à cela, la réception (320) d'une règle de politique de réduction de charge, dans lequel la règle de politique de réduction de charge comprend un critère d'identification d'un ou plusieurs utilisateurs soumis à la règle de politique de réduction de charge,
l'application sélective (330) de la règle de politique de réduction de charge à un trafic de plan utilisateur du ou des utilisateurs sur la base du critère,
dans lequel (i) le rapport de charge indique, pour chacune d'une ou plusieurs catégories d'utilisateurs, une quantité respective de charge sur l'UPF (35) provoquée par la catégorie d'utilisateurs, et/ou
dans lequel (ii) le rapport de charge comprend une liste d'identifiants d'utilisateurs correspondant à des utilisateurs responsables d'une charge indiquée dans le rapport de charge.

9. Procédé selon la revendication 8, comprenant en outre la réception, depuis la SMF (45), d'une ou plusieurs demandes d'activation d'un ou plusieurs types de rapport de charge, dans lequel au moins l'une des demandes d'activation indique un déclenchement d'envoi du rapport de charge, et facultativement
dans lequel la ou les demandes d'activation du ou des types de rapport de charge comprend une demande d'activation de rapport de charge provoquée par un streaming audio/vidéo et/ou
dans lequel la ou les demandes d'activation du ou des types de rapport de charge comprend une demande d'activation de rapport de charge provoquée par de gros utilisateurs, dans lequel de gros utilisateurs sont définis comme des abonnés consommant plus qu'une quantité seuil de trafic.

10. Procédé selon la revendication 9, comprenant en outre l'envoi d'une demande d'association de protocole de commande de transfert de paquets, PFCP, à la SMF (45), dans lequel la demande d'association PFCP indique que l'UPF (35) prend en charge la fourniture du rapport de charge, et facultativement
dans lequel au moins l'une des demandes d'activation est comprise dans un accusé de réception de la demande d'association PFCP.

11. Procédé selon l'une quelconque des revendications 9 et 10, comprenant en outre ;
la réception, depuis la SMF (45), d'une demande d'établissement de session PFCP comprenant une ou plusieurs règles de commande de facturation et de politique, PCC ;
la réception de la règle de politique de réduction de charge depuis la SMF (45) dans une demande de mise à jour de session PFCP pour mettre à jour les règles PCC, et
la mise à jour des règles PCC en réponse à la demande de mise à jour de session PFCP, et facultativement
dans lequel au moins l'une des demandes d'activation est comprise dans la demande d'établissement de session PFCP.

12. Procédé selon l'une quelconque des revendications 9 à 11, dans lequel la réception de la règle de politique de réduction de charge comprend la réception de la règle de politique de réduction de charge en réponse au fait que le rapport de charge indique que l'UPF (35) est surchargée et/ou
le procédé comprenant en outre, après la réception de la règle de politique de réduction de charge, la réception d'une autre règle de politique depuis la SMF (45) qui fait en sorte qu'au moins l'un du ou des utilisateurs ne soit pas soumis à la règle de politique de réduction de charge et/ou
dans lequel le critère d'identification d'un ou plusieurs utilisateurs soumis à la règle de politique de réduction de charge comprend une indication que la règle de politique de réduction de charge s'applique à des utilisateurs qui consomment plus qu'une quantité seuil de bande passante et/ou
dans lequel le critère d'identification d'un ou plusieurs utilisateurs soumis à la règle de politique de réduction de charge comprend une indication que la règle de politique de réduction de charge s'applique à des utilisateurs qui utilisent un streaming audio/vidéo.

13. Fonction de plan utilisateur, UPF (35), configurée pour :
envoyer un rapport de charge à une fonction de gestion de session, SMF (45), et, en réponse à cela, recevoir une règle de politique de réduction de charge, dans laquelle la règle de politique de réduction de charge comprend un critère d'identification d'un ou plusieurs utilisateurs soumis à la règle de politique de réduction de charge ;
appliquer sélectivement la règle de politique de réduction de charge à un trafic de plan utilisateur du ou des utilisateurs sur la base du critère,
dans laquelle (i) le rapport de charge indique, pour chacune d'une ou plusieurs catégories d'utilisateurs, une quantité respective de charge sur l'UPF (35) provoquée par la catégorie d'utilisateurs, et/ou
dans laquelle (ii) le rapport de charge comprend une liste d'identifiants d'utilisateurs correspondant à des utilisateurs responsables d'une charge indiquée dans le rapport de charge.

14. Programme informatique (550), comprenant des instructions qui, lorsqu'elles sont exécutées sur une circuiterie de traitement (510) d'un nœud de réseau (500), amènent la circuiterie de traitement (510) à réaliser le procédé selon l'une quelconque des revendications 1 à 6 ou 8 à 12.

15. Support contenant le programme informatique selon la revendication précédente, dans lequel le support est l'un parmi un signal électronique, un signal optique, un signal radio et un support de stockage lisible par ordinateur.
